# DEMANDE DE BREVET EUROPEEN

(11) **EP 1 283 347 A1**
(43) Date de publication de la demande: **12.02.2003**
(21) Numéro de dépôt: 02291841.1
(22) Date de dépôt: 19.07.2002
(51) Int. Cl.: F02K 9/48, F02K 9/88

(54) **Système propulsif annexe d'étage cryotechnique de lanceur et étage de lanceur comprenant un tel système**

(30) Priorité: 07.08.2001 FR 0110536
(71) Demandeur: L'AIR LIQUIDE, Société Anonyme à Directoire et Conseil de Surveillance pour l'Etude et l'Exploitation des, 75321 Paris Cédex 07 (FR)
(72) Inventeur: Sturm, Etienne, 38000 Grenoble (FR)
(74) Mandataire: Le Moenner, Gabriel

(57) **Abrégé**

La tuyère de propulsion annexe (4) éjecte des gaz chauds résultant de la combustion catalytique, dans un boîtier de catalyseur (6), d'un mélange de carburant et de comburant provenant notamment des réservoirs d'ergols (2,3) du moteur principal (1) de l'étage de lanceur cryotechnique.

## Description

La présente invention concerne les étages cryotechniques de lanceurs et, plus particulièrement, les systèmes propulsifs annexes de tels étages de lanceurs.

Les étages cryotechniques de lanceurs, utilisant de l'hydrogène et de l'oxygène liquide comme ergols, devant permettre plusieurs réallumages entre des phases de vol balistique nécessitent un système de confinement des ergols et de contrôle d'attitude. Une solution classique à cet effet consiste à maintenir une faible accélération de l'étage, de manière continue ou discontinue, selon les séquences établies. D'autre part, le contrôle de l'attitude du lanceur (suivant les trois axes) est nécessaire pour toutes les phases du vol. Ces besoins nécessitent donc un système propulsif annexe au moteur principal.

On a proposé un système propulsif annexe utilisant le dégazage d'hydrogène gazeux du réservoir d'hydrogène liquide, cet hydrogène gazeux dégazé étant adressé directement à une petite tuyère (« thruster »). Un tel système présente toutefois une performance de propulsion médiocre (impulsion spécifique n'excédant pas 100 s) et requiert un système auxiliaire pour couvrir les fluctuations de flux thermique dans le réservoir d'hydrogène liquide ainsi que les pics d'accélération lors du réallumage et de l'extinction du moteur principal.

La présente invention a pour objet de proposer un système propulsif annexe simple, léger, fiable et efficace et fournissant notamment une impulsion spécifique élevée (supérieure à 400 s).

Pour ce faire, l'invention propose un système propulsif annexe d'étage cryotechnique de lanceur comprenant au moins un réservoir de carburant de moteur principal et au moins une tuyère de propulsion annexe ayant une conduite d'amenée de gaz reliée au réservoir de carburant, dans lequel la conduite d'amenée de gaz comprend un boîtier de catalyseur entre une partie aval de la conduite reliée à la tuyère de propulsion annexe et une partie amont reliée au réservoir de carburant et à un réservoir de comburant.

Selon d'autres caractéristiques plus particulières de l'invention :
- la partie aval de la conduite d'amenée de gaz est reliée au réservoir de comburant ;
- la partie aval de la conduite d'amenée de gaz est reliée à un échangeur de chaleur en relation d'échange thermique avec la partie amont de la conduite d'amenée de gaz.

Un tel système permet de contrôler la poussée annexe par action sur le débit brûlé ou le rapport de mélange et présente une fiabilité élevée, en particulier du fait qu'il ne nécessite pas de système d'allumage électrique.

La présente invention concerne également un étage cryotechnique de lanceur comprenant un moteur principal et au moins un système propulsif annexe tel que définit ci-dessus.

D'autres caractéristiques et avantages de la présente invention ressortiront de la description suivante d'un mode de réalisation, donné à titre illustratif mais nullement limitatif, faite en relation avec le dessin annexé, sur lequel :

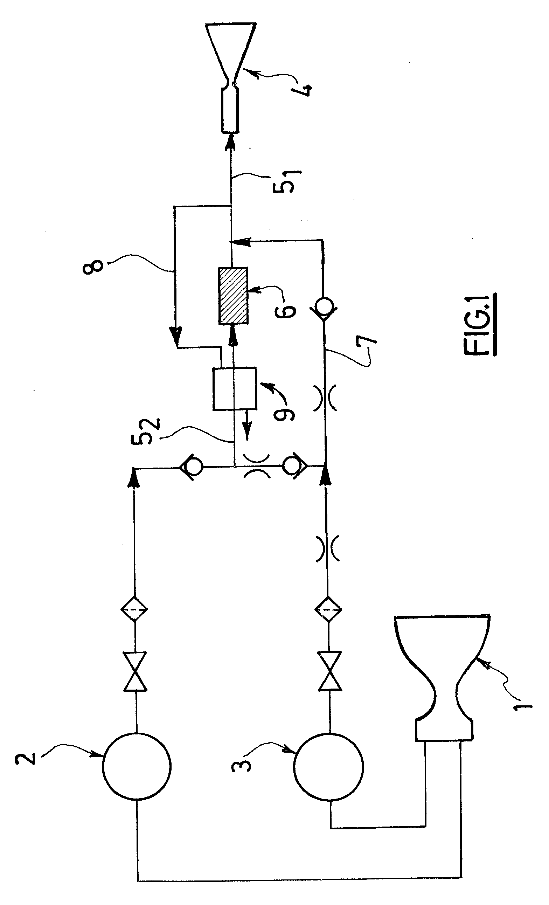

La Figure 1 représente de façon schématique un agencement d'un système propulsif annexe d'un étage cryotechnique de lanceur selon l'invention.

Sur la Figure 1, on reconnaît le moteur principal cryotechnique 1 d'un étage de lanceur et ses deux réservoirs 2 et 3 d'hydrogène liquide (carburant) et d'oxygène liquide (comburant).

Selon un aspect de l'invention, l'étage de lanceur comporte au moins une tuyère de propulsion annexe 4 (« thruster ») alimentée par une conduite de gaz comprenant une partie aval 5₁ directement reliée à la tuyère 4 et une partie amont 5₂ sélectivement reliée, par des systèmes de vannes, à la fois au réservoir d'hydrogène 2 et au réservoir d'oxygène 3. La conduite d'amenée de gaz comprend, entre les parties amont 5₂ et aval 5₁, un boîtier de catalyseur 6 contenant un catalyseur platine et/ou palladium provoquant une combustion catalytique du mélange hydrogène et oxygène acheminé, dans un rapport de mélange d'environ 1, dans la partie amont 5₂ de la ligne de conduite de gaz, pour produire un mélange de gaz de combustion à une température moyennement élevée, inférieure à 1 000 K, les gaz de combustion étant éjectés et détendus dans la tuyère annexe 4 avec une forte impulsion spécifique, supérieure à 300 s.

Selon un aspect de l'invention, on prévoit en outre une canalisation 7 reliant le réservoir d'oxygène 3 à la partie aval 5₁ de la conduite d'amenée de gaz pour injecter dans les gaz chauds résultant de la combustion catalytique dans le boîtier 6 de l'oxygène résiduel avec un rapport de mélange plus proche de la stochiométrie et réaliser ainsi une post-combustion à haute température, supérieure à 1 000 K, augmentant encore l'impulsion spécifique des gaz éjectés dans la tuyère 4, à des valeurs dépassant 400 s.

Selon un autre aspect de l'invention, une partie des gaz chauds dans la partie aval 5₁ de la conduite d'amenée de gaz est dérivée dans une conduite 8 vers un échangeur de chaleur 9 disposé en relation d'échange de chaleur avec la partie amont 5₂ de la conduite d'amenée de gaz pour réchauffer le mélange d'oxygène et d'hydrogène dans la partie amont 5₂ avant son entrée dans le boîtier de catalyseur 6 afin d'augmenter l'efficacité de ce dernier.

Quoique l'invention ait été décrite en relation avec un mode de réalisation particulier, elle ne s'en trouve pas limitée mais est susceptible de modifications et de variantes qui apparaîtront à l'homme de métier dans le cadre des revendications ci-après. En particulier, l'oxygène alimentant le boîtier de catalyseur 6 peut être prélevé, non pas dans le réservoir d'oxygène du moteur principal 1, mais dans un stockage indépendant d'oxygène haute pression.

## Revendications

1. Système propulsif annexe d'étage cryotechnique de lanceur comprenant au moins un réservoir de carburant (2) de moteur principal (1) et au moins une tuyère de propulsion annexe (4) ayant une tubulure d'amenée de gaz reliée au réservoir de carburant, **caractérisé en ce que** la conduite d'amenée de gaz comprend un boîtier de catalyseur (6) entre une partie aval (5₁) reliée à la tuyère de propulsion annexe (4) et une partie amont (5₂) reliée au réservoir de carburant (2) et à un réservoir de comburant (3).

2. Système selon la revendication 1, **caractérisé en ce que** la partie aval (5₁) de la conduite d'amenée de gaz est reliée (8) à un échangeur de chaleur (9) en relation d'échange thermique avec la partie amont (5₂) de la conduite d'amenée de gaz.

3. Système selon l'une des revendications 1 et 2, **caractérisé en ce que** le catalyseur contient du platine et/ou du palladium.

4. Système selon l'une des revendications précédentes, **caractérisé en ce que** le réservoir de comburant (3) est le réservoir de comburant du moteur principal (1).

5. Système selon l'une des revendications 1 à 3, **caractérisé en ce que** le réservoir de comburant (3) est un réservoir de comburant annexe.

6. Système selon l'une des revendications précédentes, **caractérisé en ce que** le carburant est l'hydrogène.

7. Etage cryotechnique de lanceur comprenant un moteur principal (1) et au-moins un système propulsif annexe selon l'une des revendications précédentes.
